# EUROPÄISCHE PATENTSCHRIFT

(11) **EP 2 774 670 B1**
(45) Veröffentlichungstag und Bekanntmachung des Hinweises auf die Patenterteilung: **08.11.2017**
(21) Anmeldenummer: 13001171.1
(22) Anmeldetag: 08.03.2013
(51) Int. Cl.: B01J 19/02, B01J 3/00, B01J 3/04

(54) **System umfassend einen Reaktor und eine Unterdruckerzeugungseinrichtung**
System comprising a reactor and a vacuum generator
Système comprenant un réacteur et une unité de génération d'une dépression

(43) Veröffentlichungstag der Anmeldung: 10.09.2014
(73) Patentinhaber: Tantec GmbH, 63457 Hanau (DE)
(72) Erfinder: Boeminghaus, Knut, 61440 Oberursel (DE); Raab, Georg, 63457 Hanau (DE)
(74) Vertreter: Knoblauch, Andreas

(56) Entgegenhaltungen:
- DE-A1- 3 720 603
- DE-A1- 3 743 820
- GB-A- 667 347
- US-A- 3 354 913
- US-A- 4 291 104
- US-A- 4 818 629
- US-A- 4 997 124
- US-B1- 6 878 212
- DAVID FREY ET AL: "Recent Successes in Tantalum Clad Pressure Vessel Manufacture: A New Generation of Tantalum Clad Vessels", PROCEEDINGS OF CORROSION SOLUTIONS CONFERENCE, 2003, Seiten 163-169, XP055068667, Gefunden im Internet: URL:http://dynamicmaterials.com/jdownloads /White%20Papers/3-paper22_frey_040402.pdf> [gefunden am 2013-06-28]

## Beschreibung

Die Erfindung betrifft ein System mit einem Reaktor und einer Unterdruckerzeugungseinrichtung wobei der Reaktor mindestens einem einen Innenraum begrenzenden Wandabschnitt, der auf seiner dem Innenraum zugewandten Innenseite mit einer Auskleidung versehen ist, umfasst. Ein derartiger Reaktor ist beispielsweise aus US 6 878 212 B1 bekannt.
In einem derartigen Reaktor können Chemikalien bereitgehalten werden, die in dem Innenraum miteinander reagieren sollen. Unter einem Reaktor soll aber auch eine Anordnung verstanden werden, durch die Chemikalien hindurchgeleitet werden, beispielsweise in Form eines flüssigen und/oder gasförmigen Stromes. Der Begriff "Reaktor" schließt hier also auch eine Kolonne und einen Behälter ein.
Der Wandabschnitt bildet einen Teil einer Wand, die den Innenraum begrenzt. Der Wandabschnitt kann auch die gesamte Wand bilden. Der Wandabschnitt stellt eine mechanische Stabilität zur Verfügung, so dass die beim Hindurchleiten der Chemikalien oder beim Bereithalten der Chemikalien, gegebenenfalls bei einer auftretenden Reaktion, auftretenden Kräfte von dem Wandabschnitt aufgenommen werden können.

Bei manchen Chemikalien besteht allerdings das Risiko, dass sie das Material, aus dem der Wandabschnitt gebildet ist, angreifen, beispielsweise durch Korrosion. In diesem Fall ist eine Auskleidung notwendig, die den Innenraum von der Innenseite des Wandabschnitts trennt und damit schützt. Die Auskleidung ist gegen die vorgesehenen Chemikalien beständig.

Wenn die Auskleidung aus einem teuren Material gebildet ist, ist man bestrebt, die Auskleidung so dünn wie möglich zu machen. Die Dicke der Auskleidung wird dann auf den Schutz des Materials des Wandabschnitts abgestimmt. Dies ist solange unproblematisch, wie der Innenraum unter Atmosphärendruck oder unter einem Überdruck steht. Ein Überdruck wird durch den Wandabschnitt aufgenommen, wenn die Auskleidung durch den Überdruck gegen den Wandabschnitt gepresst wird.

Ein Problem tritt allerdings dann auf, wenn im Innenraum ein verminderter Druck, also ein Druck unter dem Druck der Umgebung auftritt. In diesem Fall kann die Auskleidung von der Innenseite abgehoben werden. Dabei entstehen vielfach mechanische Belastungen, für die die Auskleidung nicht ausgelegt ist. Die Auskleidung wird dann beschädigt, so dass die Schutzwirkung nicht mehr gegeben ist und der Wandabschnitt durch die Chemikalien angegriffen wird.

Eine Verbindung zwischen der Auskleidung und dem Wandabschnitt, beispielsweise durch Löten, erfordert einen relativ großen Arbeitsaufwand. Eine andere Verbindungsart, wie das Explosionsplattieren, erfordert relativ viel Auskleidungsmaterial und ist damit ebenfalls relativ teuer.

US 4 997 124 A zeigt eine vakuumisolierte doppelwandige Metallstruktur und ein Verfahren zu ihrer Herstellung. Dargestellt ist eine äußere Hülle oder Flasche, in der eine innere Hülle oder Flasche angeordnet ist, wobei beide Flaschen aus Edelstahl gebildet und an ihren oberen Enden miteinander verbunden sind. Die innere Flasche ist auf ihrer der äußeren Flasche zugewandten Außenseite mit einer Folie aus aktivierten Titan bedeckt. Darüber hinaus kann eine Kupferfolie um die Titanfolie herumgewickelt sein. Diese Folien dienen dazu, Stickstoff aus dem Raum zwischen den beiden Flaschen zu absorbieren.

US 3 354 913 A zeigt eine Metallauskleidungsstruktur mit hoher Korrosionsbeständigkeit. Ein Behälter ist mit einer Auskleidung versehen, die auch aus Tantal bestehen kann. Diese Auskleidung wird mit Stopfen verschweißt, die in die Wand des Behälters eingeschraubt sind. Diese Stopfen können auch eine konische Form haben oder sie können mit einer weiteren Kappe versehen werden, um zu verhindern, dass sie in den Behälter hineingezogen werden. Die Stopfen sind hohl, d.h. mit einem Längskanal versehen. Eine Schweißnaht ist an dem Ende des Längskanals angeordnet, an dem der Stopfen die Auskleidung berührt.

DE 37 20 603 A1 zeigt einen Druckbehälter mit einem Druckmantel aus Stahl und einer innenseitigen durch Sprengen aufgebrachten Plattierung, die aus Tantal bestehen kann. Wenn Plattierungsabschnitte durch eine Schweißnaht miteinander verbunden werden sollen, wird zum Zwecke der Leckageüberwachung ein Anschlussstutzen in die Stahlplatte eingeschraubt. Hier ist ein Durchgangskanal vorgesehen, der an der Innenseite der Plattierung mündet. Hier ist eine Abdeckplatte vorgesehen mit einem kleinen Abstand zur Innenseite, der einen Prüfkanal bildet. Der Prüfkanal folgt dem Verlauf der Schweißnaht.

US 4 291 104 A zeigt eine gelötete korrosionsbeständig ausgekleidete Ausrüstung mit einem Stahlflansch, der mit einer Tantal-Legierungsschicht versehen ist. Sowohl die Tantal-Legierungsschicht als auch der Stahlflansch sind mit Nickel elektroplattiert, um ein nachfolgendes Silberlöten zu erleichtern.

GB 667 347 A zeigt korrosionsbeständige Auskleidungen und Abdeckungen. Ein Behälter ist mit einer Auskleidung versehen. Zwischen der Auskleidung und dem Behälter ist ein kleiner Zwischenraum vorgesehen, der mit einer Flüssigkeit gefüllt ist, die im betriebsbereiten Zustand des Reaktors flüssig ist. Damit wird einem unterschiedlichen Ausdehnungsverhalten von Auskleidung und Behälter Rechnung getragen.

DE 37 43 820 A1 zeigt ein Sicherheitssystem eines Hochdruckreaktors zur Herstellung von aggressiven Medien. Der Reaktor weist einen Mantel, ein Endstück und einen Deckel auf, wobei eine Auskleidung aus einem korrosionsbeständigen Material vorgesehen ist. Zwischen dem Behälter und der Auskleidung sind mehrere Streifen in Längsrichtung eingelegt, die in vorgegebenen Abständen mit Bohrungen und auf ihrer Außenseite auf der gesamten Länge mit Nuten versehen sind.

David Frey et al: "Recent Successes in Tantalum Clad Pressure Vessel Manufacture: A New Generation of Tantalum Clad Vessels", Proceedings of corrosion solutions Conference, 2003, Seiten 163 bis 169, beschreibt den Aufbau eines Reaktors mit einer Stahlbasis und einer Tantal-Auskleidung, wobei die Tantal-Auskleidung mit der Stahlbasis durch Explosionsschweißen verbunden ist. Zwischen der Stahlbasis und der Tantal-Auskleidung kann noch eine Kupferschicht vorgesehen sein. An Stellen, an denen die Tantal-Auskleidung aus mehreren Elementen zusammengesetzt ist, ist ein Verbindungsstreifen vorgesehen, der auf die Tantal-Auskleidung aufgelegt und mit den beiden Tantal-Elementen verschweißt wird. In der Lücke zwischen den Tantal-Elementen, der Stahlbasis und dem Tantal-Verbindungsstreifen ist ein Füllkörper angeordnet, der diese Lücke vollständig ausfüllt.

Der Erfindung liegt die Aufgabe zugrunde, einen Reaktor auch für einen verminderten Druck im Innenraum geeignet zu machen.

Diese Aufgabe wird durch ein System mit einem Reaktor und einer Unterdruckerzeugungseinrichtung gemäß Anspruch 1 gelöst, wobei der Reaktor mindestens einem einen Innenraum begrenzenden Wandabschnitt, der auf seiner dem Innenraum zugewandten Innenseite mit einer Auskleidung versehen ist, umfasst, und mindestens ein mit der Unterdruckerzeugungseinrichtung verbundener und mit Unterdruck beaufschlagter Fluidanschluss durch den Wandabschnitt verläuft, der zwischen der Innenseite und der Auskleidung mündet, wobei die Auskleidung mindestens zwei Teile aufweist, die durch eine Verbindungsnaht miteinander verbunden sind, wobei der Fluidanschluss im Bereich der Verbindungsnaht angeordnet ist, zwischen der Verbindungsnaht und der Innenseite ein Schutzstreifen angeordnet ist, die Auskleidung und/oder der Wandabschnitt im Bereich der Verbindungsnaht eine Ausformung aufweisen, die einen Hohlraum bildet, in dem der Schutzstreifen angeordnet ist und der Schutzstreifen zu mindestens einer Begrenzungswand des Hohlraums einen Abstand aufweist, der die Ausbreitung des Unterdrucks aus dem Fluidanschluss erleichtert. Der Fluidanschluss wird im Betrieb des Reaktors mit Unterdruck beaufschlagt, beispielsweise dadurch, dass er mit einer "Vakuumpumpe" verbunden wird. Der Unterdruck pflanzt sich durch den Fluidanschluss in den Spalt zwischen der Innenseite und der Auskleidung fort und kann sich dann in dem Spalt zwischen der Innenseite und der Auskleidung weiter ausbreiten. Der Unterdruck zwischen der Innenseite und der Auskleidung wirkt einem möglichen verminderten Druck oder Unterdruck im Innenraum entgegen und verhindert, dass die Auskleidung von der Innenseite des Wandabschnitts weggezogen wird. Der an den Fluidanschluss angelegte Unterdruck muss nicht einmal sehr genau gesteuert werden. Wenn der Unterdruck am Fluidanschluss größer ist als (oder annähernd gleich wie) der Unterdruck im Innenraum, dann wird die Auskleidung durch die Druckdifferenz gegen den Wandabschnitt gepresst, was unschädlich ist, weil der Wandabschnitt die dabei entstehenden Kräfte problemlos aufnehmen kann.

Der Unterdruck, der an dem Fluidanschluss angelegt ist, kann sich entlang der Verbindungsnaht fortpflanzen. Hier steht vielfach ein etwas größerer freier Querschnitt zur Verfügung, als in anderen Bereichen zwischen der Innenseite und der Auskleidung.

Insbesondere dann, wenn die Auskleidung aus einem Material, wie Tantal, als Hauptbestandteil gebildet ist, entstehen beim Schweißen relativ hohe Temperaturen, so dass die Gefahr besteht, dass bei der Herstellung der Verbindungsnaht der Wandabschnitt beschädigt wird. Diese Beschädigung wird durch einen Schutzstreifen mit hoher Zuverlässigkeit verhindert.
Die Auskleidungen und/oder der Wandabschnitt weisen im Bereich der Verbindungsnaht eine Ausformung auf, die einen Hohlraum bildet, in dem der Schutzstreifen angeordnet ist. Dies hat unter anderem den Vorteil, dass der Schutzstreifen in Position gehalten werden kann, wenn die beiden Teile der Auskleidung zusammengefügt werden. Man kann also sicherstellen, dass sich der Schutzstreifen am richtigen Ort befindet, wenn die Verbindungsnaht hergestellt wird.

Der Schutzstreifen weist zu mindestens einer Begrenzungswand des Hohlraums einen Abstand auf. Dieser Abstand oder Spalt erleichtert die Ausbreitung des Unterdrucks aus dem Fluidanschluss weiter. Man erreicht dadurch eine sehr gleichmäßige Unterdruckbeaufschlagung der Auskleidung von der Innenseite des Wandabschnitts her, so dass das Risiko, dass die Auskleidung von dem Wandabschnitt weg bewegt wird, außerordentlich klein bleibt. Das Risiko einer Beschädigung der Auskleidung wird dadurch sehr klein gehalten.
Vorzugsweise liegt die Auskleidung an der Innenseite an. Auch dann, wenn die Auskleidung und der Wandabschnitt mit einer relativ genauen Passung aneinander anliegen, verbleibt immer ein ausreichender Pfad, durch den sich der Unterdruck im gesamten Bereich zwischen der Auskleidung und dem Wandabschnitt ausbreiten kann, auch wenn hier kein eigentlicher Spalt vorliegt. Vielfach reicht die Rauigkeit der Innenseite und/oder die Rauigkeit der der Innenseite zugewandten Seite der Auskleidung aus, um den notwendigen Pfad für den Unterdruck zur Verfügung zu stellen.

In einer bevorzugten Ausführung ist vorgesehen, dass die Innenseite und die Auskleidung jeweils eine Zylinderform aufweisen. Die Innenseite und die Auskleidung sind also in Umfangsrichtung geschlossen. Der Unterdruck, der durch den Fluidanschluss hindurch in dem Bereich zwischen der Auskleidung und der Innenseite erzeugt wird, kann sich also in Umfangsrichtung ausbreiten und dafür sorgen, dass die Auskleidung über den gesamten Umfang immer an dem Wandabschnitt festgehalten wird.

Hierbei ist bevorzugt, dass die Zylinderform einen kreisförmigen Querschnitt aufweist. Der Wandabschnitt und die Auskleidung bilden damit Kreiszylinder, was den Vorteil hat, dass hier keine störenden Ecken und Kanten entstehen.

Vorzugsweise weist die Auskleidung eine Dicke von maximal 1 mm auf. Die Auskleidung hat also eine sehr geringe mechanische Stabilität. Die Dicke reicht aus, um die Innenseite des Wandabschnitts vor den Chemikalien im Innenraum zu schützen. Eine größere mechanische Stabilität ist auch nicht erforderlich. In vielen Fällen wird sogar eine geringere Dicke ausreichen, beispielsweise 0,7 mm. Bei größeren Drücken im Innenraum wird die Auskleidung gegen die Innenseite des Wandabschnitts gepresst. Bei verminderten Drücken im Innenraum hält der Unterdruck zwischen dem Wandabschnitt und der Auskleidung die Auskleidung an der Innenseite des Wandabschnitts fest.

Vorzugsweise weist die Auskleidung Tantal oder eine Tantal Legierung (im Folgenden kurz "Tantal" genannt) als Hauptbestandteil auf. Tantal ist gegenüber den meisten Chemikalien ausreichend beständig. Tantal ist allerdings relativ teuer, so dass man durch eine geringe Dicke der Tantal-Auskleidung, die man auch als "Liner" bezeichnen kann, die Kosten für den Reaktor in vertretbaren Grenzen halten kann.

Hierbei ist bevorzugt, dass die Verbindungsnaht als Schweißnaht ausgebildet ist. Man kann dann zwei Teile der Auskleidung miteinander verschweißen, um die Verbindungsnaht gegen die Chemikalien dicht zu machen.

Dies gilt insbesondere dann, wenn der Schutzstreifen aus dem gleichen Material wie die Auskleidung gebildet ist. Wenn man beispielsweise eine Auskleidung mit Tantal als Hauptbestandteil verwendet, dann kann man auch einen Schutzstreifen mit Tantal als Hauptbestandteil verwenden. Selbst dann, wenn sich beim Herstellen der Verbindungsnaht eine zusätzliche Verbindung zwischen den beiden zu verbindenden Teilen der Auskleidung und dem Schutzstreifen ergibt, wird der Wandabschnitt nicht in Mitleidenschaft gezogen.

Die Erfindung wird im Folgenden anhand eines bevorzugten Ausführungsbeispiels in Verbindung mit der Zeichnung beschrieben. Hierin zeigen:
- Fig. 1: einen schematischen Querschnitt durch einen Reaktor und
- Fig. 2: einen Schnitt II-II nach Fig. 1.

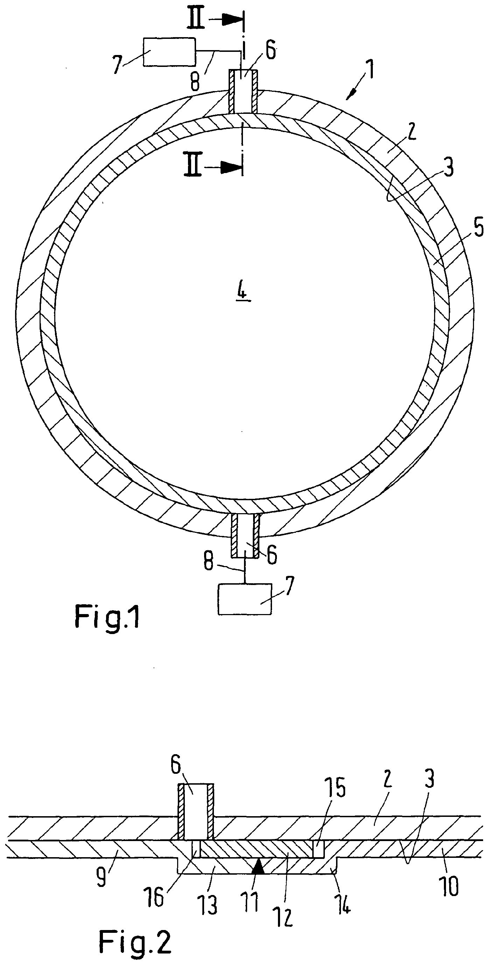

Ein Reaktor 1, der in Fig. 1 im schematischen Querschnitt dargestellt ist, weist eine zylinderförmige Wand 2 auf, die mit ihrer Innenseite 3 einen Innenraum 4 begrenzt. Im vorliegenden Ausführungsbeispiel ist die Wand 2 in Umfangsrichtung durchgehend ausgebildet. Dies ist aber nicht unbedingt erforderlich. Anstelle einer in Umfangsrichtung durchgehenden Wand 2 kann man auch einen anderen Reaktor verwenden, bei dem lediglich ein Wandabschnitt vorgesehen ist.

Die Wand 2 ist beispielsweise aus einem Stahl, z.B. Edelstahl, ausgebildet. Die Wand 2 weist eine ausreichende mechanische Stabilität auf, um Kräfte aufnehmen zu können, die sich beispielsweise durch Drücke oder Strömungen im Innenraum 4 ergeben.

Der Reaktor 1 kann auch als "Kolonne" oder "Behälter" bezeichnet werden.

Wenn im Innenraum 4 Flüssigkeiten oder Gase vorhanden sind, die die Wand 2 angreifen oder sogar zerstören können, ist es in der Regel erforderlich, zwischen dem Innenraum 4 und der Innenseite 3 eine Auskleidung 5 vorzusehen. Die Auskleidung 5 ist hier übertrieben dick dargestellt. Die Auskleidung 5 hat relativ zur Dicke der Wand 2 gesehen eine wesentlich kleinere Dicke. Die Dicke der Auskleidung liegt beispielsweise in der Größenordnung von 1 mm oder weniger. Die Auskleidung 5 kann auch als "Liner" bezeichnet werden.

Die Auskleidung 5 ist, genau wie die Wand 2, im vorliegenden Ausführungsbeispiel als Kreiszylinder ausgebildet, d.h. sie bildet einen Hohlzylinder mit einem kreisförmigen Querschnitt.

Die Auskleidung 5 ist als Formteil gebildet, dessen Außendurchmesser an den Innendurchmesser der Wand 2 angepasst ist. Die Auskleidung 5 kann also mit einem sehr geringen Spiel in die Wand 2 eingeschoben werden. Die Auskleidung 5 liegt dann an der Innenseite 3 an, so dass sie bei Auftreten von Drücken im Innenraum 4 zwar gegen die Innenseite 3 der Wand 2 gepresst wird. Eine Verformung der Auskleidung 5 ist damit allerdings nicht verbunden.

Durch die Wand 2 sind im vorliegenden Ausführungsbeispiel zwei Fluidanschlüsse 6 geführt, die mit einer nur schematisch dargestellten Unterdruckerzeugungseinrichtung 7 oder kurz "Vakuumpumpe" verbunden sind. Natürlich kann man auch nur eine einzige Unterdruckerzeugungseinrichtung 7 verwenden und diese über geeignete Leitungen 8 mit mehreren Fluidanschlüssen 6 verbinden. Die beiden Fluidanschlüsse 6 sind in Umfangsrichtung verteilt. Auch in Längsrichtung der Wand 2, bezogen auf die Darstellung der Fig. 1 senkrecht zur Zeichenebene, können mehrere Fluidanschlüsse 6 vorgesehen sein. Jeder Fluidanschluss 6 versorgt einen "Unterdruckbereich". Ein oder mehrere Unterdruckbereiche können nach außen abgedichtet sein, gegebenenfalls auch gruppenweise.

Der Fluidanschluss 6 mündet an der Innenseite 3, d.h. er endet zwischen der Innenseite 3 und der Auskleidung 5.

Auch dann, wenn die Auskleidung 5 passgenau oder mit geringem Spiel in der Wand 2 sitzt, hat der Unterdruck, der an den Fluidanschlüssen 6 erzeugt wird, die Möglichkeit, sich über den gesamten Umfang der Auskleidung 5 und in Längsrichtung der Wand 2 auszubreiten, beispielsweise durch eine unvermeidbare Rauigkeit der Innenseite 3 der Wand 2 und/oder einer entsprechenden Rauigkeit der Außenseite der Auskleidung 5. Da sich im Grunde nur ein Druck fortpflanzen muss, größere Fluidströme aber vermieden werden, kann sich der Unterdruck auch dann fortpflanzen, wenn die Auskleidung 5 an der Innenseite 3 anliegt.

Die Unterdruckerzeugungseinrichtungen 7 können ohne weiteres mit einem konstanten Unterdruck betrieben werden. Wenn der durch die Unterdruckerzeugungseinrichtungen 7 erzeugte Druck absolut niedriger ist als der Druck im Innenraum 4, dann presst der Druck im Innenraum 4 die Auskleidung 5 gegen die Innenseite 3 der Wand 2, so dass die gleichen Verhältnisse entstehen, wie bei einem Überdruck im Innenraum 4. Wenn die Drücke im Innenraum 4 und an der Unterdruckerzeugungseinrichtung 7 gleich sind, wird die Auskleidung 5 durch ihre Eigensteifigkeit in Anlage an der Innenseite 3 der Wand 2 gehalten. Solange der Druck im Innenraum 4 den Druck der Unterdruckerzeugungseinrichtungen 7 nicht unterschreitet, bleibt die Auskleidung 5 in Anlage an der Innenseite 3 der Wand 2, so dass eine Verformung der Auskleidung 5 zuverlässig verhindert werden kann.

Ein in Fig. 1 dargestellter Reaktor hat vielfach eine Länge von mehreren Metern (bezogen auf die Darstellung der Fig. 1: senkrecht zur Zeichenebene). Es ist in vielen Fällen nicht möglich, eine Auskleidung 5 mit einer entsprechenden Länge zu erzeugen.

Aus diesem Grund ist die Auskleidung 5 aus mindestens zwei Teilen 9, 10 gebildet, die durch eine Schweißnaht 11 als Verbindungsnaht miteinander verbunden sind.

Die Auskleidung 5 und damit ihre Teile 9, 10 weisen Tantal als Hauptbestandteil auf. Beim Verschweißen von Tantal benötigt man relativ hohe Temperaturen in der Größenordnung von 3.000° C.

In Fig. 2 ist zu erkennen, dass der Fluidanschluss 6 im Bereich der Schweißnaht 11 angeordnet ist. Dabei ist nicht erforderlich, dass der Fluidanschluss 6 in Überdeckung mit der Schweißnaht 11 steht. Die mögliche Entfernung zwischen dem Fluidanschluss 6 und der Schweißnaht 11 ergibt sich aus der nachfolgenden Erläuterung.

Um den Mantel 2 beim Schweißen vor einer Beschädigung zu schützen, ist zwischen dem Mantel 2 und der Schweißnaht 11 ein Schutzstreifen 12 angeordnet. Der Schutzstreifen 12 ist aus dem gleichen Material gebildet, wie die Auskleidung 5. Man kann daher durchaus in Kauf nehmen, dass beim Herstellen der Schweißnaht 11 auch eine Verbindung der beiden Teile 9, 10 mit dem Schutzstreifen 12 erfolgt. Eine Beaufschlagung oder Beschädigung des Mantels 2 erfolgt hingegen nicht.

Man kann den Fluidanschluss 6 beim Herstellen der Schweißverbindung verwenden, um ein Schutzgas, beispielsweise Argon, einzubringen.

Um den Schutzstreifen 12 aufzunehmen, weisen die beiden Teile 9, 10 jeweils eine Ausformung 13, 14 auf, die gemeinsam mit der Wand 2 einen Hohlraum 15 bilden, in dem der Schutzstreifen 12 angeordnet ist. Der Hohlraum 15 hält den Schutzstreifen 12 in der gewünschten Position.

Es ist selbstverständlich auch möglich, dass der Hohlraum 15 in der Wand 2 angeordnet ist. Hierzu kann dann die Wand 2 entsprechende Ausformungen aufweisen. Der Hohlraum 15 kann auch durch Ausformungen in der Wand 2 und in der Auskleidung 5, z.B. an den Teilen 9, 10 gebildet sein.

Es ist zu erkennen, dass der Schutzstreifen 12 den Hohlraum 15 nicht ganz ausfüllt, so dass ein Spalt 16 verbleibt, der durch einen Abstand zwischen der Begrenzungswand des Hohlraums 15, die durch den Teil 9 der Auskleidung 5 gebildet ist, und den Schutzstreifen 12 gebildet ist, und durch den Fluid aus dem Fluidanschluss 6 strömen kann. Da der Spalt 16 in Umfangsrichtung durchgehend verläuft, kann sich der Unterdruck durch den Spalt 16 in Umfangsrichtung relativ schnell und ungestört ausbreiten. Von dem Spalt 16 aus kann sich der Unterdruck dann in axialer Richtung der Innenseite 3, d.h. der Längsrichtung der Wand 2 weiter ausbilden, so dass die Auskleidung 5 mit der notwendigen Zuverlässigkeit an der Innenseite 3 gehalten werden kann.

Entlang der Längserstreckung der Wand 2 können mehrere Fluidanschlüsse 6 angeordnet sein, um die Unterdruckversorgung zwischen der Innenseite 3 und der Auskleidung 5 über die Länge des Reaktors 1 oder der Kolonne gleichmäßiger zu gestalten.

Die Anordnung arbeitet sozusagen selbstregelnd. Wenn durch einen Unterdruck im Innenraum 4 die Auskleidung 5 geringfügig von der Innenseite 3 der Wand 2 abgehoben wird, kann sich der durch den Fluidanschluss 6 zugeführte Unterdruck sofort dahin fortpflanzen und die Auskleidung 5 wieder in Anlage an die Innenseite 3 ziehen. Eine nennenswerte Verformung der Auskleidung 5, die zu einer Beschädigung führen könnte, wird dadurch mit hoher Zuverlässigkeit vermieden.

## Patentansprüche

1. System mit einem Reaktor (1) und einer Unterdruckerzeugungseinrichtung (7) wobei der Reaktor (1) mindestens einem einen Innenraum (4) begrenzenden Wandabschnitt (2), der auf seiner dem Innenraum (4) zugewandten Innenseite (3) mit einer Auskleidung (5) versehen ist, umfasst, **dadurch gekennzeichnet, dass** mindestens ein mit der Unterdruckerzeugungseinrichtung (7) verbundener und mit Unterdruck beaufschlagter Fluidanschluss (6) durch den Wandabschnitt (2) verläuft, der zwischen der Innenseite (3) und der Auskleidung (5) mündet, wobei die Auskleidung (5) mindestens zwei Teile (9, 10) aufweist, die durch eine Verbindungsnaht (11) miteinander verbunden sind, wobei der Fluidanschluss (6) im Bereich der Verbindungsnaht (11) angeordnet ist, zwischen der Verbindungsnaht (11) und der Innenseite (3) ein Schutzstreifen (12) angeordnet ist, die Auskleidung (5) und/oder der Wandabschnitt (2) im Bereich der Verbindungsnaht eine Ausformung (13, 14) aufweisen, die einen Hohlraum (15) bildet, in dem der Schutzstreifen (12) angeordnet ist und der Schutzstreifen (12) zu mindestens einer Begrenzungswand des Hohlraums (15) einen Abstand (16) aufweist, der die Ausbreitung des Unterdrucks aus dem Fluidanschluss (6) erleichtert.

2. System nach Anspruch 1, **dadurch gekennzeichnet, dass** die Auskleidung (5) an der Innenseite (3) anliegt.

3. System nach Anspruch 1 oder 2, **dadurch gekennzeichnet, dass** die Innenseite (3) und die Auskleidung (5) jeweils eine Zylinderform aufweisen.

4. System nach Anspruch 3, **dadurch gekennzeichnet, dass** die Zylinderform einen kreisförmigen Querschnitt aufweist.

5. System nach einem der Ansprüche 1 bis 4, **dadurch gekennzeichnet, dass** die Auskleidung (5) eine Dicke von maximal 1 mm aufweist.

6. System nach einem der Ansprüche 1 bis 5, **dadurch gekennzeichnet, dass** die Auskleidung (5) Tantal als Hauptbestandteil aufweist.

7. System nach einem der Ansprüche 1 bis 6, **dadurch gekennzeichnet, dass** die Verbindungsnaht als Schweißnaht (11) ausgebildet ist.

8. System nach einem der Ansprüche 1 bis 7, **dadurch gekennzeichnet, dass** der Schutzstreifen (12) aus dem gleichen Material wie die Auskleidung (5) gebildet ist.

## Claims

1. System comprising a reactor and a negative pressure production device (7), wherein the reactor (1) comprises at least a wall section (2) bounding an interior space (4), which wall section is provided with a lining (5) on its inner surface (3) facing the interior space (4), **characterized in that** at least one fluid connection (6) connected to the negative pressure production device (7) and admittable with a negative pressure runs through the wall section (2) to open between the inner surface (3) and the lining (5), wherein the lining (5) comprises at least two parts (9, 10), which are connected to one another by a connection seam (11), wherein the fluid connection (6) is arranged in the region of the connection seam (11), a protection strip (12) is arranged between the connection seam (11) and the inner surface (3), the lining (5) and/or the wall section in a region of the connection seam (11) comprise a shaping forming a hollow space (15) in which the protective strip (12) is arranged and the protective strip (12) is arranged at a distance (16) from at least one boundary wall of the hollow space (15), which facilitates the spreading of the negative pressure from the fluid connection.

2. System according to Claim 1, **characterized in that** the lining (5) bears against the inner surface (3).

3. System according to Claim 1 or 2, **characterized in that** the inner surface (3) and the lining (5) each have a cylinder form.

4. System according to Claim 3, **characterized in that** the cylinder form has a circular cross-section.

5. System according to any of Claims 1 to 4, **characterized in that** the lining (5) has a maximum thickness of 1 mm.

6. System according to any of Claims 1 to 5, **characterized in that** the lining (5) comprises tantalum as main component.

7. System according to any of Claims 1 to 6, **characterized in that** the connecting seam is formed as a weld seam (11).

8. System according to any of claims 1 to 7, **characterized in that** the protective strip (12) is formed from a same material as the lining (5).

## Revendications

1. Système avec un réacteur (1) et une unité de génération de dépression (7), le réacteur (1) comprenant au moins une section de paroi (2) délimitant un espace intérieur (4), qui est dotée d'un revêtement (5) sur son côté intérieur (3) tourné vers l'espace intérieur (4), **caractérisé en ce qu'**au moins un raccord de fluide (6), relié à l'unité de génération de dépression (7) et soumis à une dépression, traverse la section de paroi (2) et débouche entre le côté intérieur (3) et le revêtement (5), le revêtement (5) présentant au moins deux parties (9, 10) qui sont reliées l'une à l'autre par un joint de raccordement (11),
sachant que
le raccord de fluide (6) est agencé dans la zone du joint de raccordement (11),
une bande de protection (12) est agencée entre le joint de raccordement (11) et le côté intérieur (3),
le revêtement (5) et/ou la section de paroi (2) présentent dans la zone du joint de raccordement, une formation (13, 14) créant une cavité (15) dans laquelle la bande de protection (12) est agencée,
et la bande de protection (12) présente, par rapport à au moins une paroi de délimitation de la cavité (15), une distance (16) qui facilite la propagation de la dépression à partir du raccord de fluide (6).

2. Système selon la revendication 1, **caractérisé en ce que** le revêtement (5) s'appuie contre le côté intérieur (3).

3. Système selon la revendication 1 ou 2, **caractérisé en ce que** le côté intérieur (3) et le revêtement (5) présentent respectivement une forme cylindrique.

4. Système selon la revendication 3, **caractérisé en ce que** la forme cylindrique présente une section transversale circulaire.

5. Système selon l'une quelconque des revendications 1 à 4, **caractérisé en ce que** le revêtement (5) présente une épaisseur au maximum de 1 mm.

6. Système selon l'une quelconque des revendications 1 à 5, **caractérisé en ce que** le revêtement (5) présente du tantale comme composant principal.

7. Système selon l'une quelconque des revendications 1 à 6, **caractérisé en ce que** le joint de raccordement est réalisé sous forme de joint de soudure (11).

8. Système selon l'une quelconque des revendications 1 à 7, **caractérisé en ce que** la bande de protection (12) est formée à partir du même matériau que le revêtement (5).
